(19) Europäisches Patentamt / European Patent Office / Office européen des brevets

(11) **EP 1 494 973 B1**

(12) **EUROPÄISCHE PATENTSCHRIFT**

(45) Veröffentlichungstag und Bekanntmachung des Hinweises auf die Patenterteilung:
**29.09.2010 Patentblatt 2010/39**

(21) Anmeldenummer: 03724989.3

(22) Anmeldetag: **09.04.2003**

(51) Int Cl.:
*C02F 7/00* (2006.01)     *B09C 1/08* (2006.01)
*C02F 1/78* (2006.01)     *C02F 1/72* (2006.01)

(86) Internationale Anmeldenummer:
**PCT/EP2003/003696**

(87) Internationale Veröffentlichungsnummer:
**WO 2003/086988 (23.10.2003 Gazette 2003/43)**

(54) **VERFAHREN ZUR BEHANDLUNG VON GEWAESSERN BZW. DEREN SEDIMENTE**

METHOD FOR TREATING BODIES OF WATER OR THE SEDIMENTS THEREOF

PROCEDE POUR TRAITER DES EAUX ET LEURS SEDIMENTS

(84) Benannte Vertragsstaaten:
**AT BE BG CH CY CZ DE DK EE ES FI FR GB GR HU IE IT LI LU MC NL PT RO SE SI SK TR**

(30) Priorität: **18.04.2002 DE 10217373**

(43) Veröffentlichungstag der Anmeldung:
**12.01.2005 Patentblatt 2005/02**

(73) Patentinhaber:
• **Van Oord N.V.**
  **3067 GG Rotterdam (NL)**
• **Brewaba Wasserbaugesellschaft Bremen mbH**
  **28207 Bremen (DE)**
• **Prexl, Egon**
  **26624 Victorbur/Südbrookmerland (DE)**

(72) Erfinder: **PREXL, Egon**
**26624 Victorbur/Südbrookmerland (DE)**

(74) Vertreter: **Maiwald, Walter**
**Maiwald Patentanwalts GmbH**
**Elisenhof**
**Elisenstrasse 3**
**80335 München (DE)**

(56) Entgegenhaltungen:
EP-A- 0 854 295     WO-A-98/23544
GB-A- 2 218 083     US-A- 4 604 000

• **PATENT ABSTRACTS OF JAPAN vol. 2000, no. 03, 30. März 2000 (2000-03-30) & JP 11 333477 A (MITSUBISHI HEAVY IND LTD), 7. Dezember 1999 (1999-12-07)**
• **PATENT ABSTRACTS OF JAPAN vol. 2000, no. 01, 31. Januar 2000 (2000-01-31) & JP 11 267691 A (MITSUBISHI HEAVY IND LTD), 5. Oktober 1999 (1999-10-05)**

**Beschreibung**

**Technisches Gebiet**

Die Erfindung betrifft ein Verfahren zur Aufrechterhaltung oder Wiederherstellung eines ökologisch verträglichen (natürlichen) Sauerstoffgehalts in Gewässern, wie Hafenbecken, Meeresbuchten, Seen, Flüssen und Kanälen. Im besonderen betrifft die Erfindung ein Verfahren zur umweltfreundlichen Behandlung und gegebenenfalls Verlagerung von in besagten Gewässern vorhandenen Sedimenten.

**Hintergrund der Erfindung**

In stehenden wie fließenden Gewässern kann es durch den Eintrag von nährstoffreichen Abwässern, die eine Folge von Industrialisierung, dichter Besiedelung sowie intensiver landwirtschaftlicher Nutzung sind, zu einer Veränderung der Artenzusammensetzung der Gewässerbiozönose kommen. Die Erhöhung der Nährstoffgehalte in einem Gewässer, vor allem an Phosphor und Stickstoffverbindungen, fällt unter den Begriff Eutrophierung.

Zu den ökologischen Folgen einer Eutrophierung sind die bevorzugt von Grün- und Blaualgen gebildeten Algenmassenentwicklungen zu rechnen. Sie verringern die Eindringtiefe des Lichts in den Wasserkörper und bewirken beispielsweise dadurch den Verlust der photosynthetisch aktiven Makrophyten am Gewässergrund. Algenmassenentwicklungen können im Oberflächenwasser, infolge der Photosyntheseaktivität des Phytoplanktons, zu kurzfristiger Sauerstoffübersättigung führen. Der überschüssige Sauerstoff wird jedoch (hauptsächlich nachts) wieder veratmet, so dass beim Abbau der gebildeten organischen Substanzen (Mineralisation) sogar ein Sauerstoffdefizit auftritt, da die Diffusion aus der Atmosphäre in das Gewässer langsamer als der Sauerstoffverbrauch der Mineralisation verläuft. Deshalb nimmt beispielsweise in flachen Gewässern die Konzentration des im Wasser gelösten Sauerstoffs im Anschluss an intensive Algenmassenentwicklungen deutlich ab. In geschichteten Gewässern sinken absterbende Algen aus den oberflächennahen Wasserschichten in tiefere Bereiche ab, wo der vorhandene Sauerstoff durch ihren Abbau vollständig aufgebraucht wird. Dieser sauerstofffreie Volumenanteil des Wasserkörpers, der in Abhängigkeit von Morphometrie und thermischer Schichtung einen Großteil des gesamten Gewässer-Wasservolumens ausmachen kann, entfällt zwangsläufig als Lebensraum für alle auf Sauerstoff angewiesenen Lebewesen. Unter reduzierenden Bedingungen kommt es zur Bildung von Methan, Schwefelwasserstoff und Ammonium, Verbindungen die in höheren Konzentrationen toxisch wirken. In Extremsituationen wird der gesamte Wasserkörper eines Gewässers sauerstofffrei, was zum Tod zahlreicher Lebewesen führt und umgangssprachlich als "Umkippen eines Gewässers" bezeichnet wird.

Wenn ein Gewässer einmal in den Teufelskreis der Eutrophierung und des darauf folgenden Sauerstoffmangels eingetreten ist, erholt es sich aus eigener Kraft nur äußerst langsam.

Problematisch sind im Sommer auch erhöhte Wassertemperaturen. Die Löslichkeit von Sauerstoff in Wasser ist temperaturabhängig und führt im Sommer zur Abnahme der Sauerstoffkonzentration. Ökologisch funktionsfähige Gewässer werden dadurch anfällig gegen Maßnahmen, welche die Sauerstoffkonzentration noch weiter senken und damit Auslöser für beispielsweise Fischsterben sein können.

Man erkennt deutlich, dass der Sauerstoffgehalt von entscheidender Bedeutung für das ökologische Gleichgewicht eines Gewässers ist.

In fast allen Gewässern bilden sich am Grund Sedimente. So finden sich am Boden von Hafenbecken, nicht sehr stark durchspülten Meeresbuchten, in Seen und auch in Flussläufen meist mehr oder weniger starke Schlamm- und Schlickschichten, die große Anteile sedimentierter Schwebstoffe umfassen. Hier lagert sich auch Material ab, das sich aus toter organischer Biomasse zusammensetzt, die entweder im Gewässer selbst entsteht oder durch Abwässer direkt in das Gewässer eingebracht wird. Dort findet dann ein biologischer Abbau dieses Materials statt. Der Abbau erfolgt aerob unter Sauerstoffverbrauch, wenn genügend Sauerstoff vorhanden ist, jedoch anaerob, wenn Sauerstoffmangel herrscht.

Im folgenden werden die Begriffe "Sedimente", "festes Sediment" oder "Sedimentschicht" analog für das am Gewässerboden liegende, kompakte, vom darüber stehenden Wasserkörper getrennte Sediment verwendet. Der Begriff "Wasserkörper" bezieht sich auf das über dem Sediment befindliche Wasser, welches bis zu einer gewissen Wassertiefe oder bis zur Wasseroberfläche reicht und entweder über dem Sediment steht oder fließt.

Solche Sedimente können aus verschiedenen Gründen umgelagert, entfernt oder bearbeitet werden müssen. In Häfen, befahrenen Flüssen und Kanälen muss eine gewisse Wassertiefe aufrechterhalten werden, wodurch ein regelmäßiges Entfernen von Sedimentschichten nötig wird. Schadstoffbeladene oder stark mit organischem Material verunreinigte Sedimente sind eine Gefahr für den darüber stehenden Wasserkörper und müssen gereinigt oder gänzlich entfernt werden.

In den Sedimenten herrschen abhängig vom organischen Anteil und den übrigen Gewässerbedingungen zumeist anaerobe Bedingungen. Solange diese Sedimente als feste, kompakte und vom darüber liegenden Wasserkörper getrennte Schicht am Gewässerboden lagern, ist der Stoffaustausch zwischen Sediment und darüber stehendem Wasserkörper gering. Werden diese Sedimente aufgrund von oben genannten Maßnahmen aufgelockert oder gar völlig aufgewühlt und geraten somit mit dem darüber stehenden Wasserkörper in Kontakt, wird der Sauerstoff durch das sofortige Einsetzen des oxidativen Abbaus aus dem Wasserkörper verbraucht. Diesen Vorgang nennt man Sauerstoffzehrung. Der Verlauf kann grob in mehrere Schritte eingeteilt werden.

1. Sofortsauerstoffzehrung (überwiegend Sulfidzehrung),
2. Biologische Sauerstoffzehrung und
3. Stickstoffoxidation

1. Die Sofortsauerstoffzehrung wird überwiegend durch Sulfide (im wesentlichen $H_2S$), stark reduzierende anorganische Salze und leicht bakteriell abbaubare organische Substanzen bewirkt Hierbei handelt es sich um eine kurzfristige Sauerstoffabnahme (Zeitraum in Minuten bis zu ca. 3 Stunden) aus dem Gewässer - meist durch chemische Oxidation anorganischer reduzierender Ionen. Die Sulfidzehrung erfolgt sehr schnell, da Sulfid neben gelöstem Sauerstoff keinen Bestand hat. Bei geringem Sauerstoffgehalt wird der Schwefelwasserstoff zu elementarem Schwefel oxidiert, hingegen bei Sauerstoffüberschuss zu Schwefeldioxid.

2. Die biologische (bakteriologische) Sauerstoffzehrung verläuft meist langsamer über einen Zeitraum von Tagen. Hierbei wird unter gewissen Randbedingungen organisches Material unter Sauerstoffverbrauch von Bakterien (Destruenten) mineralisiert.

3. Eine weitere Art der Sauerstoffzehrung ist die Nitrifizierung durch Bakterien. Die reduzierten Stickstoffverbindungen, wie z.B. Ammonium, werden über Nitrit zum Nitrat oxidiert. Die Nitrifikation ist wie alle vorgenannten Oxidationsprozesse temperaturabhängig und setzt bei ca. > 5°C erst ein.

Ob diese Sauerstoffzehrung nun signifikant schädigend abläuft, hängt von den jeweiligen örtlichen Gegebenheiten ab, hauptsächlich aber von der gelösten Sauerstofffracht im Wasserkörper und den sauerstoffzehrenden Eigenschaften des Sediments. Normalerweise ist der über dem umzulagernden Sediment stehende Wasserkörper derart groß und hält für die ablaufenden Oxidationsvorgänge genügend Sauerstoff parat, so dass häufig eine Sauerstoffreduzierung gering oder nicht messbar ist. Es gibt allerdings auch oft Situationen, in denen der Sauerstoffgehalt eines Gewässers aufgrund natürlicher, biologischer Zehrung und geringer Löslichkeit aufgrund erhöhter Temperaturen kritisch ist, so dass eine falsche Sedimentbehandlung zu signifikanter Sauerstoffzehrung und somit zu Gewässerschädigung und beispielsweise damit verbundenen Fischsterben führen kann. Ist das Gewässer schon ohne weitere Einwirkung geschädigt, ist neben anderen Maßnahmen, wie beispielsweise das Beseitigen der Verschmutzungsursache, ein Eintrag von Sauerstoff bei der Sanierung wichtig.

Um die unerwünschten Folgen einer Sedimentbehandlung zu umgehen, ist als erstes eine genaue Analyse des Sauerstoffzehrungsverhaltens der liegenden Sedimente durchzuführen, um dieses dann in Relation mit dem jeweiligen Gewässerzustand zu beurteilen. Beispielsweise können Sedimente auf ihre sauerstoffzehrende Wirkung durch das Sensomat-System der Firma Aqualytic getestet werden. Die Messungen beruhen auf Druckdifferenzmessungen. Hierbei wird in einem geschlossenem, die Sedimentprobe enthaltenden Probengefäß bei konstanter Temperatur Sauerstoff verbraucht, wobei ein proportionaler Unterdruck entsteht. Mittels Sensor-IR misst und speichert man diese Druckdifferenz in Abhängigkeit von der Zeit. Der chemische und biologische Sauerstoffverbrauch von Hafensedimenten aus dem Ritzebütteler Sportboothafen wurden anhand des Druckverlaufs gemessen. Die Sofortsauerstoffzehrung ist am sofortigen Druckabfall von 0 hPa auf -52 hPa zu erkennen, die biologische Sauerstoffzehrung erfolgte in einem Zeitraum von ca. 10 Tagen. Die Sofortsauerstoffzehrung ist aufgrund der raschen Sauerstoffabnahme am problematischsten für das Gewässer.

Stellt man nun aufgrund der Voruntersuchungen fest, dass eine geplante Sedimentbehandlung hinsichtlich der Sauerstoffzehrung problematisch ist, muss diese unterbleiben oder in einer besonders umweltschonenden Art und Weise durchgeführt werden.

In der Vergangenheit sind zum Aufstocken des Sauerstoffgehalts Versuche mit gasförmigem Sauerstoff aus der Luft und reinem gasförmigen Sauerstoff durchgeführt worden.

DE 4416 591C1 beschreibt ein Verfahren, bei dem das Sediment mittels eines Druckluft-betriebenen Förderrohrs als Sedimentsuspension hochgefördert, anschließend gereinigt und dem Gewässer wieder zugeführt wird. Eine Ausbreitung des Sediments in das Gewässer außerhalb des Arbeitsbereichs soll durch flexible Schürzen unterbunden werden. Nachteil des Verfahrens ist, dass sich große Suspensionswolken (Baggergut-Wasser) bilden, die auseinander treiben können und aufwendig vor dem Verteilen ins freie Gewässer geschützt werden müssen. Die Resedimentation eines derart aufgewirbelten Guts ist außerdem zeitraubend. Eingeblasener gasförmiger Luftsauerstoff wie auch reiner gasförmiger Sauerstoff löst sich nur durch Diffusion und somit nicht ausreichend schnell im Wasser und steht als Reaktionspartner nur unzureichend zur Verfügung, dadurch wird in großen Bereichen des Gewässers durch das aufgewühlte Sediment trotzdem sofort intensiv Sauerstoff gezehrt.

Alternativ zu den herkömmlichen (meist "baggernden") Verfahren zur Entfernung oder Behandlung von Sedimenten gibt es ein sehr elegantes, höchst wirkungsvolles und dabei weniger aufwendiges Verfahren, wie es insbesondere in EP 0 119 653B1 beschrieben ist. Hierbei wird die abgesetzte Sedimentschicht nicht aufgewühlt, ausgebaggert oder dergleichen, sondern vielmehr durch Injektion mit Wasserstrahlen im Volumen vergrößert und auf eine geringere Viskosität eingestellt, so dass die Schicht grundsätzlich fließfähig wird (Wasserinjektionsverfahren oder WI-Verfahren). Dieser Zustand des Sediments oder Schichten des Sediments wird als suspendierte Sedimentschicht (oder auch Suspensionswolke) bezeichnet. Das so injizierte Wasser, in dem die Sedimentschicht suspendiert ist, soll im folgenden als Sedimentwasser bezeichnet werden. Wichtig ist dabei, dass die Sedimentschicht im Gegensatz zu herkömmlichen Verfahren zur Behandlung von Sedimenten als solche dabei erhalten bleibt, d. h. vom darüber stehenden Wasserkörper getrennt ist, und die Suspensionswolke nur eine relativ geringe Ausdehnung hat. Weist der darunter liegende Boden ein entsprechendes Gefälle auf, so kann die suspendierte Sedimentschicht entsprechend der Schwerkraft abfließen. Alternativ kann sie bei fehlendem Gefälle abgepumpt werden, oder man lässt sie sich wieder absetzten, wobei sie wieder in eine feste Sedimentschicht übergeht. Besteht ein Gefälle, und soll die suspendierte Schicht trotzdem nicht abfließen, können gewässerbautechnische Maßnahmen getroffen werden, die ein Abfließen verhindern. Durch Entfernung solcher Maßnahmen kann ein Abfließen zu einem späteren Zeitpunkt ermöglicht werden.

DE 19756582 beschreibt ein Verfahren, bei dem das bereits beschriebene Verfahren aus der EP 0 199 653B1 verwendet wird. Zusätzlich wird dabei verdünntes, gasförmiges Ozon während der Wasserinjektion oder in einem zweiten Arbeitsgang nachträglich in die suspendierte Sedimentschicht eingebracht. Das Ozon, welches sich daraufhin im Sedimentwasser löst, kann oxidativ giftige metallorganische Verbindungen abbauen. Nachteilig ist, dass das Ozon erst erhebliche Diffusionsbarrieren überwinden muss, um dann gelöst im Sedimentwasser seine oxidative Wirkung zu entfalten. Wenn die Ozonbegasung gleichzeitig mit der Wasserinjektion durchgeführt wird, kann die Begasung nur von oben in die sich gerade lockernde Sedimentschicht erfolgen. Da das Gas aber sofort nach oben entweicht, ist die Eindringtiefe des Ozons in die suspendierte Sedimentschicht nur gering. Darüber hinaus kommt es durch die aufsteigenden Gasblasen zum unkontrollierten Eintrag von Ozon in den Wasserkörper. Ozon ist in seiner Funktion als starkes Oxidationsmittel auch für erwünschte Lebewesen, z.B. Fische, giftig und schadet den das Gewässer besiedelnden Organismen. Um das Ozon effektiver zu nutzen, müssen mehrere Arbeitsgänge durchgeführt werden, wobei das Ozon von unten in die suspendierte Sedimentschicht eingebracht wird. Dafür wird der Injektionsbalken unter der bereits in einem vorangehenden Arbeitsgang gebildeten suspendierten Sedimentschicht entlanggeführt, wobei die Gasausgänge nach oben gerichtet sind. Das Ozon kann sich während der Verweilzeit der Gasblasen in der suspendierten Sedimentschicht durch Diffusion im Sedimentwasser lösen. Durch Gasblasen, die der suspendierten Sedimentschicht entweichen, wird jedoch auch hier Ozon in den Wasserkörper eingebracht und kann dort nicht nur wie bereits erwähnt schädlich sein, sondern ist für den oxidativen Abbau in der suspendierten Sedimentschicht verloren.

Vor diesem Hintergrund ist es eine Aufgabe der Erfindung, ein Verfahren bereitzustellen, das es ermöglicht, ohne die Nachteile der bekannten Verfahren, die Sauerstoffkonzentration in Gewässern effektiv in einem ökologischen Gleichgewicht zu halten oder es ggf. ermöglicht, das Gleichgewicht wiederherzustellen.

Im besonderen ist es die Aufgabe der Erfindung, eine schädigende Sauerstoffzehrung beim Umlagern von Gewässersedimenten zu verhindern und damit ein umweltfreundliches Verfahren zu bieten, welches ein Behandeln, Umlagern oder Ausbaggern von Sedimenten zu jeder Jahreszeit und in jedem Umfang ermöglicht

Weitere Aufgaben und Vorteile der Erfindung ergeben sich aus der folgenden Beschreibung.

## Darstellung der Erfindung

Die Lösung der oben genannten Aufgaben kann mit dem im unabhängigen Anspruch 1 angegebenen Verfahren erreicht werden, spezielle Ausführungsformen ergeben sich aus den Unteransprüchen.

Erfindungsgemäß wird ein Verfahren zur Behandlung von Gewässern bzw. deren Sedimente eingesetzt, bei welchem dem Sediment Wasser, in dem ein umweltverträgliches Oxidationsmittel oder eine Mischung von mehreren geeigneten Oxidationsmitteln gelöst ist, im wesentlichen ohne Eintrag gasförmiger Bestandteile in das Sediment zugeführt wird, wobei das zu behandelnde Sediment suspendiert wird und als vom Wasserkörper des Gewässers getrennte suspendierte Sedimentschicht verbleibt, und die Menge an Oxidationsmittels oder der Mischung der Oxidationsmittel so gewählt wird, dass eine das Gewässer schädigende Eindiffusion von Sauerstoff aus dem Wasserkörper in die suspendierte Sedimentschicht im wesentlichen unterbleibt.

Dabei wird das Oxidationsmittel oder die Oxidationsmittelmischung direkt in dem der Umgebung für Injektionszwecke entnommener Wasser (primäres Injektionswasser) vor der Injektion zur Herstellung des sekundären Injektionswassers gebildet.

Umweltfreundliche oder geeignete Oxidationsmittel bzw. deren Mischungen im Rahmen der vorliegenden Erfindung sind alle Oxidationsmittel, die den jeweiligen Umweltauflagen entsprechen und die Aufgabe der vorliegenden Erfindung erfüllen, nämlich im wesentlichen eine schädigende Eindiffusion von Sauerstoff aus dem Wasserkörper in die suspendierte Sedimentschicht zu verhindern.

## Kurze Beschreibung der Zeichnungen

Abb.1: Schematische Darstellung einer bevorzugten Ausführungsform der Erfindung mit einem Druckreaktor

Abb.2: Schematische Darstellung einer alternativen bevorzugten Ausführungsform der Erfindung mit einem Rohrreaktor

Abb.3: Schematische Darstellung einer bevorzugten Ausführungsform des Rohr- reaktors

Abb.4: Zunahme der spezifischen Eintragsenergie mit steigender Sauerstoffkonzen- tration im Wasser.

## Detaillierte Beschreibung der Erfindung

Besonders vorteilhaft kann das herkömmlichen Wasserinjektionsverfahren (WI-Verfahren) gemäß EP 0199 653B1 für das Verfahren der vorliegenden Erfindung verwendet werden. Mit dieser Methode wird die Sedimentschicht vorsichtig durch Wasserinjektion im Volumen vergrößert und fließfähig gemacht.

Ein Vorteil dieses bekannten Verfahrens zur Behandlung des Sediments gemäß EP 0 199 653B1 ist, dass dabei eine Durchmischung des Sediments mit dem Wasserkörper unterbleibt, und die suspendierte Sedimentschicht als getrennter Reaktionsraum erhalten bleibt. Sauerstoff gelangt nur durch langsame Diffusion aus dem Wasserkörper in die suspendierte Schicht - dem Ort der Reaktion - , da ein konvektiver schneller Stofftransport durch das Vermeiden von intensivem Vermischen unterbleibt. Das bekannte Verfahren führt daher im Vergleich mit anderen Sediment-Behandlungs- bzw. Beseitigungsverfahren im Stand der Technik schon an sich nicht zu einer nennenswerten zusätzlichen Sauerstoffzehrung.

Um aber die im Sediment vorhandenen sauerstoffzehrenden Stoffe auch zu beseitigen und um Sauerstoffzehrung weitestgehend zu vermeiden, wird erfindungsgemäß das Suspendieren der Sedimente mit Wasser durchgeführt, indem ein umweltverträgliches Oxidationsmittel gelöst ist.

Dadurch, dass das Oxidationsmittel schon im Wasser gelöst eingebracht wird, ist es sofort im Sedimentwasser zu 100% vorhanden und steht damit in dem Reaktionsraum zur Verfügung, in dem der oxidative Abbau stattfinden soll. Es wird somit ein vom übrigen Wasserkörper getrennter Reaktionsraum gebildet, und gleichzeitig dort ein Oxidationsmittel für den oxidativen Abbau eingebracht. Durch die räumliche Nähe der Reaktionspartner, z.B. Sauerstoff und Sulfid, in diesem Reaktionsraum erzeugt man hohe molekulare Stoßzahlen, die wiederum zu hohen Reaktionsgeschwindigkeiten führen. Der oxidative Abbau erfolgt dadurch schneller und effektiver im Vergleich zu Verfahren, die das Oxidationsmittel gasförmig einbringen.

Zusätzlich wird dadurch, dass das Oxidationsmittel in gelöster Form in die Sedimentschicht eingetragen wird, die Entstehung und der Austritt von Gasblasen aus der Sedimentschicht vermieden. So unterbleibt die Aufwirbelung der Sedimentschicht, die beim Eintrag von Luft, Ozon, $O_2$ oder anderen Stoffen im Gaszustand unvermeidlich ist und welche die unerwünschte Sauerstoffzehrung im Wasserkörper auslöst. Darüber hinaus kann ein unerwünschter Eintrag von Oxidationsmittel in den Wasserkörper durch aufsteigende Gasblasen vermieden werden.

Alternativ zum mobilen Injektionsverfahren gemäß EP 0199 653B1 können Injektionsanlagen auch fest in Gewässern installiert werden. In Gewässerabschnitten, die einer ortsbedingten ständig wiederkehrenden Sauerstoffarmut unterliegen, wie z. B. vor Wehren, kann eine solche dauerhaft nach Bedarf verfügbare Anlage wünschenswert sein.

Die Menge an eingebrachten Oxidationsmittel wird im allgemeinen so gewählt, dass sie mindestens ausreicht, die vorher bestimmte (unvermeidbare) sauerstoffzehrende Wirkung des Sediments zu kompensieren und die Sauerstoffkonzentration so hoch einzustellen, dass wenigstens kein Konzentrationsgefälle zwischen der suspendierten Sedimentschicht und dem Wasserkörper entsteht Die zu oxidierenden Verbindungen in der suspendierten Sedimentschicht werden somit schnell abgebaut und es kommt zu keiner konzeatrationsbedingten Eindiffusion von Sauerstoff aus dem Wasserkörper.

Erfindungsgemäß werden die in den Sedimenten vorhandenen und zur Sauerstoffzehrung (Sofortsauerstoffzehrong, Biologische Sauerstoffzehrung und Nitrifikation) führenden Stoffe, wie z.B. organische Verbindungen oder auch z.B. Schwefelwasserstoff, Ammoniak und Ammoniumverbindungen, durch das eingebrachte Oxidationsmittel oder die Kombination der eingebrachten Oxidationsmittel chemisch und biologisch abgebaut. Vor allem kann so auch die besonders problematische Sofortsauerstoffzehrung stark abgemildert oder gänzlich vermieden werden.

Das Oxidationsmittel oder die Oxidationsmittelmischung kann auf verschiedene Art und Weise in Wasser gelöst und anschließend dem Sediment zugeführt werden.

Das Oxidationsmittel wird direkt im primären Injektionswasser zur Bildung des sekundären Injektionswassers ohne zwischengeschaltete Bildung des Reaktivwassers gelöst zusätzlich kann das Oxidationsmittel oder die Oxidationsmittelmischung werden in hoher Konzentration in Wasser gelöst. Das so gebildete Reaktivwasser wird an- schließend dem für Injektionszwecke aus der Umgebang entnommenen Wasser (pri- märes Injektionswasser) zugemischt, dabei erhält man das oxidationsmittelhaltige sekundäreInjektionswasser. Dieses wird in die Sedimente injiziert.

Reaktivwasser auch separat zum primären oder zusätzlich zum sekundären Injektionswasser und damit in lokal höheren Konzentrationen in die Sedimentschicht injiziert werden. Bei der Injektion von sekundärem Injektionswasser und separat zusätzlichem Reaktivwasser können das sekundäre Injektionswasser und das Reaktivwasser entweder die gleichen oder unterschiedliche Oxidationsmittel enthalten. Der Oxidationsmitteleintrag kann so gezielt gesteuert werden, eine Überdosierung, die gegebenenfalls einen unerwünschten Eintrag in den Wasserkörper mit sich bringt, kann so vermieden werden. Im Fall von stärkeren Oxidationsmitteln, wie Beispielsweise Ozon oder Wasserstoffperoxid, die das Ökosystem des Wasserkörpers schädigen könnten, ist dies höchst wünschenswert. Die Zugabe des Oxidationsmittels in gelöster Form bringt zusätzlich zur genaueren Dosierbarkeit und Wahl des Einbringungsortes den Vorteil, dass nur so das Suspendieren der Sedimente ohne unerwünschte, durch Gasblasen bewirkte Aufwirbelungen vonstatten gehen kann.

Gemäß der vorliegenden Erfindung wird zur Herstellung von sekundärem Injektionswassers eine ausreichende Menge Oxidationsmittel oder Oxidationsmittelmischung direkt im primären Injektionswasser zur Erzeugung des sekundären Injektionswassers gelöst, das anschließend gemäß dem bekannten Injektionsverfahren in die Sedimentschicht injiziert wird.

Der selbe Gewässerbodenabschnitt kann einmal oder mehrmals hintereinander bearbeitet werden. Bei starker Verschmutzung kann ein zwischenzeitliches Absetzen und neu Suspendieren mit Injektionswasser nötig sein.

Als Oxidationsmittel können alle in Wasser löslichen und umweltverträglichen Oxidationsmittel verwendet werden. Bevorzugt werden Oxidationsmittel, die nur Sauerstoff oder nur Sauerstoff und Wasserstoff enthalten, wie elementarer Sauerstoff, Ozon und Wasserstoffperoxid; elementarer Sauerstoff wird besonders bevorzugt. Mischungen von verschiedenen Oxidationsmitteln sind ebenfalls möglich. Der Einsatz von Ozon oder Wasserstoffperoxid kann von Vorteil sein, wenn höhere Oxidationskraft nötig ist, z.B. wenn die Sedimentschicht stark mit organischen Verbindungen oder auch giftigen metallorganischen Verbindungen belastet ist. Ein Eintrag der starken Oxidationsmittel Ozon und Wasserstoffperoxid in den Wasserkörper kann durch genaue Dosierung wie oben beschrieben vermieden werden. Andererseits kann Sauerstoff so relativ überdosiert werden, dass der Überschuss langsam in den Wasserkörper eindiffundiert und dort die Sauerstoffkonzentration erhöht, wenn das gewünscht ist.

Die Vorteile der Wasserinjektionsmethode gemäß EP 0 199 653B1, wie langsames Abfließenlassen der suspendierten Sedimentschicht oder Abpumpen, können voll ausgenutzt werden. Man kann auch die erfindungsgemäß behandelte suspendierte Sedimentschicht wieder absetzen lassen, diese verbleibt dann am Ort als gereinigtes Sediment oder kann, wenn es gewünscht ist, mit konventionellen Baggermethoden ohne Gefahr der Sauerstoffzehrung ausgebaggert werden. Ein Abfließen lassen kann durch geeignete Gewässerbautechnische Maßnahmen auch verhindert werden.

Das Reaktivwasser, in dem das Oxidationsmittel oder die Oxidationsmittelmischung in ausreichend hoher Konzentration gelöst ist, wird entweder direkt auf dem das Wasserinjektionsverfahren durchführenden Wasserfahrzeug in situ beim behandeln des Gewässers oder aber an Land hergestellt und dann in Vorratsbehältern auf dem Wasserfahrzeug untergebracht. Bevorzugt wird die Herstellung direkt auf dem Wasserfahrzeug. Für die Herstellung direkt auf dem Wasserfahrzeug verwendet man einen Reaktor, in welchem kontinuierlich über Spezialinjektoren dem aus dem Umgebungsbereich entnommenen Wasser das Oxidationsmittel oder Oxidationsmittelgemisch zugeführt wird. Der Reaktor kann beispielsweise platzsparend entlang der Injektionswasserleitung zum Injektionsbalken angebracht werden.

Bei dauerhaft installierten Injektionsanlagen wird die Anlage zur Gewinnung des Reaktivwassers in der Nähe, den örtlichen Bedingungen angepasst, installiert.

Reiner elementarer Sauerstoff wird als Oxidationsmittel bevorzugt.

Prinzipiell handelt es sich bei dem bevorzugten Verfahren unter Verwendung von Sauerstoff als Oxidationsmittel um das Einleiten von in Wasser gelöstem, hoch angereichertem Sauerstoff in Gewässer bzw. Sedimente.

Im folgenden werden die physikalischen Grundlagen des Eintrags von gelöstem Sauerstoff aufgezeigt und für die technische Ausführung bevorzugten Vorrichtungen beschrieben. Darüber hinaus wird die schiffsbautechnische Umsetzung dieser Vorrichtungen erläutert.

Physik des Sauerstoffeintrags:

Um die besonders schädigende gegebenenfalls beim konventionellen Baggern oder beim Baggern mit dem konventionellen WI-Verfahren entstehende Sofortsauerstoffzehrung (überwiegend durch Sulfide) auszugleichen, muss dem Sediment eine adäquate Menge an Sauerstoff zugeführt werden. Dies erfolgt bevorzugt durch ein erfindungsgemäß abgewandeltes WI-Verfahren. Hierbei wird eine adäquate Menge an Sauerstoff in die durch das konventionelle WI-Verfahren erzeugte Suspensionswolke (suspendierte Sedimentschicht) eingebracht. Dabei werden folgende Ziele erreicht:

- Die mit dem WI-Verfahren erzeugte begrenzte Suspensionswolke wird nicht z. B. durch Flotation von aufsteigenden Gasblasen auseinandergetrieben.
- Die chemische Reaktion des Sauerstoffs mit Sulfid findet überwiegend in der Suspensionswolke statt. Die für die Reaktionsgeschwindigkeit maßgebliche Stoßzahl ist aufgrund der räumlichen Nähe der Reaktionspartner Sulfid und Sauerstoff relativ groß.
- Eine Diffusion des Sauerstoffs aus dem umliegenden Wasserkörper unterbleibt weitestgehend.
- Der Sauerstoffeintrag kann je nach Fahrgeschwindigkeit des ausführenden Schiffes und der Zugabemenge des sauerstoffübersättigten Wassers per Bypass dosiert werden.

Physikalische Gesetzmäßigkeiten:

Dalton'sches Gesetz:

Nach dem Gesetz von Henry Dalton gilt für die Löslichkeit von Gasen in Wasser folgende Gesetzmäßigkeit:

Gleichung 1:

$$c_s = H_i^T \times p_i$$

$c_s$ : max. Sättigungskonzentration ($g/m^3$)
$H_i$ : Henry-Konstante des Gases in Reinwasser ($g/m^3$ bar)
$p_i$ : Partialdruck des Gases i (bar abs)

Die Henry-Konstante ist abhängig von der Temperatur. Die ebenfalls bestehende geringfügige Abhängigkeit der Henry-Konstanten vom Druck und vom Salzgehalt im Wasser kann für praktische Rechnungen vernachlässigt werden. In Tabelle 2 sind die Henry-Konstanten für die wichtigsten Gase der Luft, $N_2$, $O_2$ und $CO_2$ bei verschiedenen Temperaturen wiedergegeben.

Tabelle 2: Werte der Henry-Konstante bei verschiedenen Temperaturen für $N_2$, $O_2$ und $CO_2$

| Temperatur [°C] | H [$g/m^3$ x bar] | | |
|---|---|---|---|
| | $N_2$ | $O_2$ | $CO_2$ |
| 0 | 29,0 | 68,7 | 3340,9 |
| 5 | 25,7 | 60,2 | 2771,1 |
| 10 | 23,0 | 53,6 | 2324,5 |
| 15 | 20,8 | 48,2 | 1970,0 |
| 20 | 19,1 | 43,7 | 1693,6 |
| 25 | 17,7 | 40 | 1470,9 |
| 30 | 16,6 | 36,9 | 1281,7 |

Die Henry-Konstante bzw. die $O_2$-Sättigungskonzentration von reinem Sauerstoff bei einem Sauerstoffpartialdruck von 1 bar beträgt bei 15°C Wassertemperatur z. B. 48,2 $g/m^3$.
Für den Parialdruck eines Gases gilt allgemein:

Gleichung 2:

$$p_i = p_{ges} \times y_i$$

$p_i$ : Partialdruck des Gases i (bar abs)
$p_{ges}$ : Gesamtdruck (bar abs)
$y_i$ : Volumenanteil des Gases i

Stickstoff, Sauerstoff und Kohlendioxid sind in der Luft zu folgenden Volumenanteilen $y_i$ enthalten:

| | | | | | | |
|---|---|---|---|---|---|---|
| $N_2$ | : | $YN_2$ | = | 0,78 | = | 78 % |
| $O_2$ | : | $YO_2$ | = | 0,21 | = | 21 % |
| $CO_2$ | : | $YCO_2$ | = | 0,0003 | = | 0,03 % |

Jedem dieser Gase ist demnach ein entsprechender Partialdruck zuzuordnen. Die Summe der Partialdrücke der einzelnen Gaskomponenten ist gleich dem Gesamtdruck $p_{ges}$.

Der Partialdruck des Sauerstoffs in der Luft ist deshalb bei einem Gesamtdruck von 1 bar nur 0,21 bar bzw. der von Stickstoff 0,78 bar. So ergibt sich der Sättigungswert von Luftsauerstoff bei 10 °C Wassertemperatur und 1 bar abs, wenn Gleichung 2 in Gleichung 1 eingesetzt wird

$$c_{SL} = H_{O_2}{}^{10} \times p_{ges} \times y_{O_2} = 53,6 \times 1 \times 0,21 = 11,3 \; (g/m^3)$$

Die max. Sättigungskonzentration gemäß Gleichung 1 für Luftstickstoff, Luftsauerstoff und Kohlendioxid in der Luft bei einem Gesamtdruck von 1 bar abs und einer Wassertemperatur von 15°C sind aus Tabelle 3 zu ersehen:

Tabelle 3: Sättigungswerte von $N_2$ $O_2$ und $CO_2$ der Luft in Reinwasser bei 15 °C und 1 bar abs.

| | $H^{15}$ [g/m³ bar] | $p_i$ [bar] | $c_s$ [g/m³] |
|---|---|---|---|
| Luftstickstoff | 20,8 | 0,78 | 16,2 |
| Luftsauerstoff | 48,2 | 0,21 | 10,1 |
| $CO_2$ in der Luft | 1970,0 | 0,0003 | 0,6 |

Beim Eintrag von Luft in Wasser z. B. durch eine feinblasige Belüftung am Boden eines Beckens ist also bei 15°C Wassertemperatur eine maximale Sauerstoffkonzentration entsprechend der Gleichung

$$C_{SL} = 48,2 \times 1 \times 0,21 = 10,10 \; g/m^3 \; zu \; erreichen!$$

Beim Einsatz von reinem Sauerstoff anstelle von Luft liegt die erreichbare Sauerstoffkonzentration bei gleichen Randbedingungen (Druck und Temperatur) um den Faktor 4,8 höher, da der Sauerstoffanteil in reinem Sauerstoff 100 % ist und deshalb der Sauerstoffpartialdruck $p_i$ gleich dem Gesamtdruck $p_{ges}$ ist (100 % : 21 % = 4,8).

allgemein: $\quad p_{O2} = p_{ges} \times y_{O2}$
reiner Sauerstoff: $\quad y_{O2} = 1$
$\quad p_{O2} = p_{ges}$

In Tabelle 4 sind die Sättigungswerte des Luftsauerstoffs denen des reinen Sauerstoffs gegenübergestellt:

Tabelle 4: Sättigungswerte von Luftsauerstoff und reinem Sauerstoff in g/m$^3$ bei 1 bar abs in Abhängigkeit von der Wassertemperatur

| Temperatur [°C] | 0 | 5 | 10 | 15 | 20 | 25 | 30 |
|---|---|---|---|---|---|---|---|
| Luftsauerstoff | 14,4 | 12,6 | 11,3 | 10,1 | 9,2 | 8,4 | 7,8 |
| Reinsauerstoff | 68,7 | 60,2 | 53,6 | 48,2 | 43,7 | 40 | 36,9 |

Dieser Sachverhalt soll an einem Fallbeispiel erläutert werden:

Wassertemperatur 15 °C
02-Konzentration im Rohwasser 0 g $O_2$/m$^3$
Betriebsdruck des O2-Reaktors 0,5 bar ü = 1,5 bar abs

Nach dem Gesetz von Henry Dalton sollte eine $O_2$-Austrittskonzentration aus dem Sauerstoffreaktor von 48,2 x 1,5 g $O_2$/m$^3$ = 72,3 g/m$^3$ möglich sein. Da aber im Rohwasser auch $N_2$ und $CO_2$ gelöst sind und mit dem $O_2$-Eintrag ins Wasser eine Ausgasung von $N_2$ und $CO_2$ aus dem Wasser einhergeht, wird in der Gasphase des Reaktors keine 100 %ige $O_2$-Atmospähre mehr vorhanden sein. Praktische Messungen haben ergeben, dass unter den o. a.. Betriebsbedingungen der $O_2$-Gehalt der Gasphase im Reaktorkopfraum etwa 65 % beträgt.
Aus dem Reaktor wird deshalb unter Praxisbedingungen eine Austrittskonzentration von:

$$c_{SO^2} = H_{O^2}^{15} \times p_{ges} \times y_{O^2} = 48,2 \times 1,5 \times 0,65 = 47,0 \ (g \ O_2/m^3)$$

erreicht.
Der reine Sauerstoff ist also um den Faktor 4,8 besser löslich als der Luftsauerstoff. Die höhere Sättigungskonzentration des reinen Sauerstoffs hat jedoch auch eine höhere Lösungsgeschwindigkeit bzw. einen geringeren Energieaufwand für den Sauerstoffeintrag zur Folge.
Anhand des 1. Fick'schen Diffusionsgesetzes sollen diese Vorteile erklärt werden.

Das 1. Fick'sche Diffusionsgesetz:

Das Gesetz von Henry Dalton sagt aus, welche $O_2$-Sättigungskonzentrationen sich im Gleichgewicht zur Gasphase einstellt. Für die Anwendung des reaktiven gelösten Sauerstoffs ist die Geschwindigkeit maßgeblich, mit der der Sauerstoff im Wasser gelöst wird. Im stationären Fall ist das durch das 1. Fick'sche Diffusionsgesetz zu beschreiben:

Gleichung 3:

$$dQ/dt = K_D \times A \times dc/dx$$

Hiernach ist die pro Zeiteinheit dt eingetragene Sauerstoffmenge dQ proportional der Kontaktfläche A zwischen dem $O_2$-Konzentragionsgefälle dc/dx in dieser Kontaktschicht (Phasengrenzschicht).
Der Proportionalitätsfaktor $K_D$ heißt Diffusionskonstante und ist für das System Wasser/Sauerstoff im wesentlichen von der Wassertemperatur abhängig.
Eine Optimierung der pro Zeiteinheit dt eingetragenen Sauerstoffmenge dQ kann über eine große Austauschfläche A wie folgt erreicht werden:

- durch eine möglichst feine Zerteilung des Wassers in der sauerstoffhaltigen Gasphase (z. B. durch einen Lochboden oder ähnliche Stromstörer im Druckreaktor)
- - durch eine möglichst feine und gleichmäßige Verteilung des sauerstoffhaltigen Gases im Wasser (feinblasiger Eintrag)
über ein hohes Konzentrationsgefälle dc/dx an den Kontaktflächen zwischen Wasser und Gasphase

- durch eine ständige Erneuerung der Austauschffächen mit Hilfe von Pumpen oder Gebläsen
- - durch einen hohen Sauerstoffpartialdruck in der Gasphase bzw. durch die hohe zugehörige Sauerstoff-Sättigungskonzentration
- durch eine geringe Sauerstoffkonzentration im Wasser.
- durch eine schnelle und hohe Sauerstoffzehrung nach Austritt aus dem Reaktor

Stark vereinfacht gilt für den differentiellen Ausdruck dc/dx folgende Beziehung:

$$dc/dx \; = \; (c_S \; - \; c_X)/ \, \delta$$

Dabei ist $c_S$ die vom Sauerstoffpartialdruck in der Gasphase bestimmte Sättigungskonzentration, $c_X$ die meßbare Sauerstoffkonzentration im Wasser. Mit $\delta$ ist hier die Dicke der flüssigkeitsseitigen Phasengrenzschicht bezeichnet. Ein hoher Sauerstoffpartialdruck hat also einen großen Wert des Konzentrationsgefälles in der Grenzschicht, dc/dx, zur Folge. Dies gilt insbesondere, wenn gleichzeitig die Konzentration $c_X$ durch Verteilung des eingetragenen Sauerstoffs und durch Verbrauchvorgänge (z. B. bakterielle Zehrung) klein gehalten wird.

Ein hohes Konzentrationsgefälle bewirkt gemäß Gleichung 3 einen großen Sauerstoffeintrag pro Zeiteinheit. Daraus resultiert eine geringe spezifische Eintragsenergie.

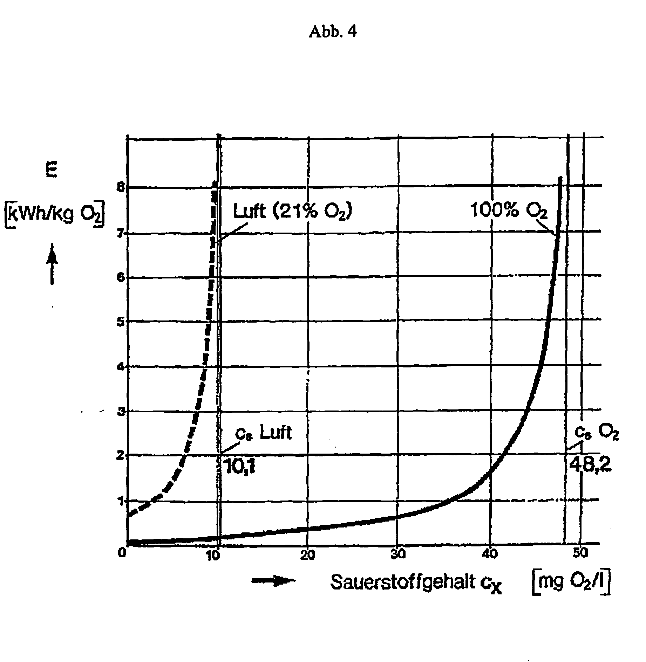

In Abb. 4 ist die spezifische Eintragsenergie einer beliebigen Eintragsvorrichtung für Luft bzw. reinen Sauerstoff dargestellt.

Um im vorliegenden Fall möglichst viel Sauerstoff in Wasser zu lösen, wird der Lösungsvorgang bevorzugt in einem Druckreaktor vorgenommen. Nach Dalton verhalten sich die idealen Gase entsprechend der Zustandsgleichung:

$$p \; x \; V \; = \; n \; x \; RT$$

Dadurch ergibt sich von konstantem Volumen und einer Verdoppelung des Druckes eine Verdoppelung der gelösten Gasmenge, d. h., statt ca. 44 mg $O_2$/l würden bei 2 Atmosphären 88 mg $O_2$/l unter der Bedingung der idealen Gase theoretisch gelöst werden können. Welche Drücke möglich sind, um einen optimalen Sauerstoffeintrag zu ermöglichen, muss jeweils für den speziellen Fall ermittelt werden. Theoretisch kann in herkömmlichen Druckreaktoren, die z. B. von Linde geliefert werden, Sauerstoff mit 6 Atmosphären eingetragen werden. Das bedeutet eine theoretische Sauerstoffeintragsmenge von ca. 260 g $O_2$/m$^3$. Da allerdings dieser Druck beim Einleiten in das Gewässer in der Regel nur bei einer Tiefe von 50 - 60 m unterhalb der Wasseroberfläche möglich wäre, um eine Rücklösung des im Wasser gelösten Sauerstoffs in die Gasphase zu vermeiden, muss jeweils ein optimaler Druck für die optimal zu lösende Sauerstoffmenge ermittelt werden. Dieser optimale Druck hängt u.a. von dem Wasserdruck ab, in den das sauerstoffbeladene Wasser eingeleitet wird. Da in der bevorzugten Ausführungsform das mit gelöstem Sauerstoff angereichert Wasser (Reaktivwasser) vor der Entspannung in dem Injektionsbalken mit dem Injektionswasser (primäres Injektionswasser) vermischt wird, um das sekundäre Injektionswasser zu bilden, ergibt sich eine Konzentrationsminderung der gelösten Sauerstoffkonzentration. Folglich ergibt sich ein Konzentrationsgefälle zwischen dem mit Sauerstoff angereicherten Wasser (Reaktivwasser) und dem WI-Injektionswasser (sekundäres Injektionswasser). Je nach Vermischungsgrad wird der gelöste Sauerstoffgehalt in diesem Bereich verdünnt, so dass unter den gegebenen Druckverhältnissen und zwar Wasserdruck + Injektionsdruck ein frühes Ausgasen weitestgehend vermieden wird.

Ferner wird das Ausgasen des gelösten Sauerstoffs durch die Sofortzehrung in der Suspensionswolke gemindert. Inwieweit dieser Effekt jeweils einen höheren Sauerstoffeintrag ermöglicht, muss im Einzelfall ermittelt werden.

Wichtig beim Lösevorgang von Sauerstoff in Wasser ist ferner die Sauerstoffübertragung durch Blasen in das Wasser (siehe hierzu Robert F. Mudde: Sauerstoffübertragung von Blasen ins Wasser, Delft-University ofTechnology, 26.06.2002). Wichtige Faktoren sind die Sauerstoffblasengröße und die Strömungsverhältnisse in den Reaktoren, die durch die Reynoldszahl beeinflusst werden.

Die Reynoldszahl informiert über den Strömungszustand.

Physikalisch wesentlich ist die Grenzschichtbetrachtung längsbeströmter Wände (Blasenwände). In einer dünnen Schicht, der Grenzschicht oder Reibungsschicht wirken starke Reibungskräfte.

$$K_R = \eta \times F \times dv/dz \,[N]$$

$$\text{Dynamische Viskosität } \eta = f(p,T) \,[Ns/m^2] \cdot$$

Die Grenzschichtdicke ist wesentlich für den Sauerstoffübergang. Sie berechnet sich wie folgt:

$$D_x = 3{,}02 \times X : (Re_x)\, \tfrac{1}{2}\,[m]\,;= 3{,}02\,(\eta \times X : \{\rho \times \upsilon\})^{0{,}5} = 3{,}02 \times X : (Re)^{0{,}5}\,[m]$$

Der in Rohren, Armaturen und Reaktoren auftretende Druckabfall begünstigt die Aufnahme des gelösten Sauerstoffs, da durch den notwendigen höheren Druck die Aufnahme erhöhter Mengen Sauerstoff möglich wird.

$$\Delta p = \lambda \times L / d \times 0{,}5 \times \rho \times v^2 \,[N/m^2]$$

Die Lösung des Sauerstoffs befindet sich hauptsächlich im turbulenten Bereich. Das bedeutet für ein zu konstruierenden Druckreaktor, dass vorzugsweise Stromstörer eingebaut werden sollten, um die Sauerstofflösung zu erhöhen.

Technische Ausführungen:

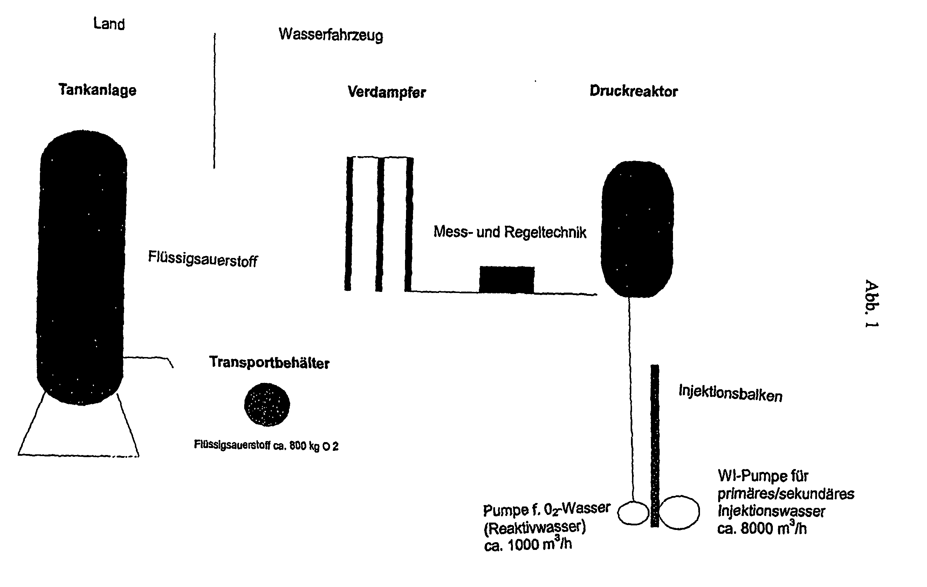

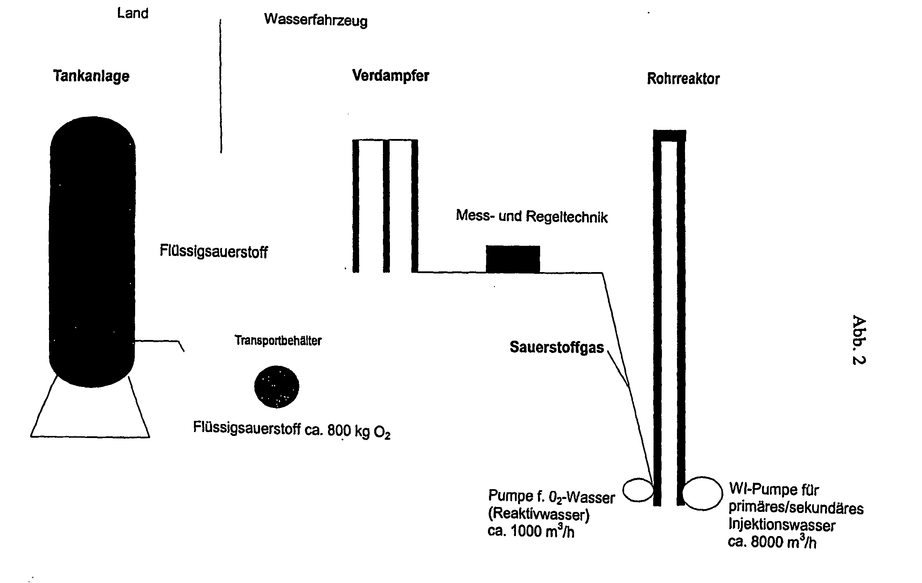

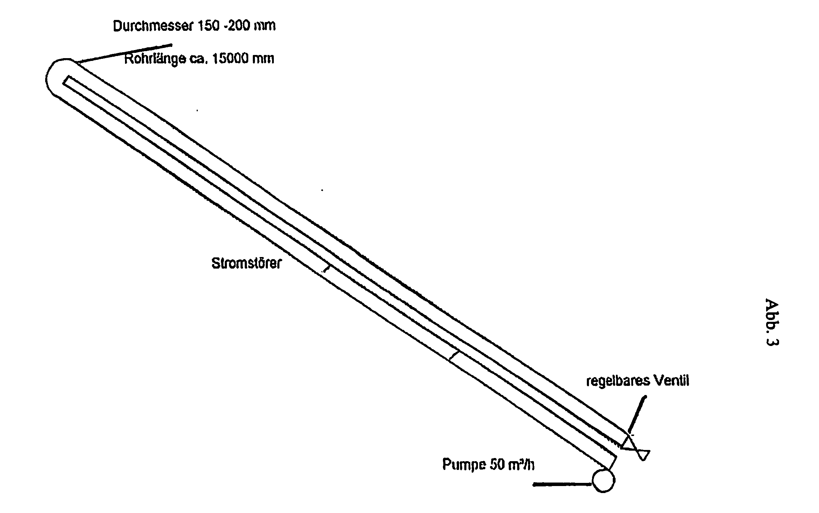

In der Abb. 1 und 2 sind bevorzugte Ausführungsformen der vorliegenden Erfindung dargestellt. Abb. 3 zeigt eine bevorzugte Ausführungsform des Rohrreaktors. Die Tankanlage mit Flüssigsauerstoff sollte mindestens eine Größe von einem Bedarf von 10 Tagen haben und wird bevorzugt fest an Land zu installiert. Die Tankanlage kann auch per LKW an verschiedene Einsatzorte transportiert werden. Die Entnahme des Flüssigsauerstoffs kann per Schlauch bis zum Wasserfahrzeug erfolgen. Bevorzugt ist die Befüllung aus der Tankanlage durch einen Transportbehälter, der ca. 1 Tagesration aufnehmen sollte. Der Transportbehälter ist auf das Wasserfahrzeug zu heben, entsprechend den einschlägigen Sicherheitsbestimmungen dort zu befestigen und an den entsprechend dimensionierten Verdampfer anzuschließen. Im Verdampfer wird durch die Außentemperatur das Flüssiggas in die Gasform entspannt. Dabei wird die notwendige Wärme der Umgebung des Verdampfers entnommen. Der Verdampfer ist entsprechend zu dimensionieren, damit ein reibungsloser Betrieb gewährleistet ist und der Verdampfer durch übermäßig Eisbildung nicht seine Funktion verliert.

Die Mess- und Regeltechnik regelt einmal den Sauerstoffstrom zum Reaktor und enthält außerdem ein Überdruckventil. Die Regelgrößen werden vor und nach dem Reaktor entnommen und in einem Verhältnisregler eingestellt. Manuell wird die Sauerstoffzugabe entsprechend der durch die Analyse festgestellte Sauerstoffzehrung der Sedimente und der Baggertiefe geregelt.

Es kann ein kommerziell erhältlicher Druckreaktor verwendet werden. In einer bevorzugten Ausführungsform wird ein Rohrreaktor verwendet (Abb. 2).

Abb. 3 zeigt mögliche Abmessungen eines geeigneten Rohrreaktors. Diese Abmessungen sind für kleinere Mengen an Reaktivwasser ausgelegt. Es ist dem Fachmann bekannt, wie entsprechende größere Anlagen dimensioniert werden müssen. Dieser Rohrreaktor ist auf 50 m$^3$ pro Stunde ausgelegt. Die Länge des Rohres entspricht insgesamt ca. 15 m. Der Durchmesser von ca. 150 - 200 mm ist so berechnet, dass für den Durchfluss von 50 m$^3$/h die Fließzeit im Rohr 12 - 20 sec. beträgt. Der Rohrreaktor erhält an den Flanschstellen Stromstörer, die die Turbulenz erhöhen sollen. An dem einen offenen Ende des Rohres befindet sich eine Pumpe, die das Wasser ansaugt und derart dimensioniert ist, dass die Rohrreibungsverluste und die Verluste der Armaturen bei der Auslegung berücksichtigt werden.

An dem anderen offenen Rohrende ist ein von oben verstellbarer Schieber zu installieren. Ein guter Wirkungsgrad wird bevorzugt im Gegenstrombetrieb erreicht.

Das so erhaltene Reaktivwasser wird beispielsweise, wie in Abb. 1 gezeigt, dem primären Injektionswasser durch die Pumpe für O$_2$-Wasser zugeführt. Das dabei erzeugte sekundäre Injektionswasser wird über den Injektionsbalken dem Sediment zugeführt. Bevorzugt wird das Reaktivwasser in einem Rohrreaktor, wie in Abb. 2 gezeigt, erzeugt und am Ende des Rohrreaktors mit dem primären Injektionswasser zur Erzeugung des sekundären Injektionswassers zugemischt. Bevorzugt wird der Rohrreaktor platzsparend entlang der Verbindung zwischen dem Wasserfahrzeug und dem Injektionsbalken angeordnet. Hierbei wird bevorzugt Wasser an dem einen Ende des Rohrreaktors, der sich an einem Ende des Injektionsbalkens befindet und an dem die Pumpe für $O_2$-Wasser angebracht ist, angesaugt. Eine Sauerstoff-Gas-Leitung, die vom Verdampfer, der sich auf dem Wasserfahrzeug befindet, zu diesem Ende des Rohrreaktors führt, leitet dem Rohrreaktor das Sauerstoffgas zu. Der Rohrreaktor führt das Wasser-Sauerstoffgemisch entlang der Verbindung zwischen Wasserfahrzeug und Injektionsbalken aufwärts zum Wasserfahrzeug und wieder abwärts zurück zum Injektionsbalken, wobei das Reaktivwasser erzeugt wird. Das so erzeugte Reaktivwasser wird dann bevorzugt dem primären Injektionswasser zur Erzeugung des sekundären Injektionswassers beigemischt.

Alternativ kann das Reaktivwasser auch separat durch ein eigens dafür parallel zum Hauptinjektionsrohr (Injektionsbalken) angelegtes Nebenrohr (zweiter Injektionsbalken) über eigene Injektionsdüsen dem Sediment zugeführt werden. So ist es beispielsweise möglich, dass das in der EP 0 119 653B1 im Prinzip beschriebene Fahrzeug für die erfindungsgemäßen Zwecke dadurch umgerüstet wird, dass vom Auslaß des Reaktors dann ein geeigneter zweiter Injektionsbalken entlang dem herkömmlichen Injektionsbalken angebracht wird.

Ferner kann der Sauerstoff zur Bildung des sekundären Reaktivwassers auch direkt ohne die zwischengeschaltete Bildung des Reaktivwassers im primären Injektionswasser gelöst werden. Der Reaktor muss entsprechend der Menge an benötigtem sekundären Injektionswasser dimensioniert werden.

Jegliches Injizieren von Wasser mit einer Sauerstoffkonzentration, die über der des dem Gewässer entnommenen Wassers liegt, ist erfindungsgemäß. In manchen Fällen kann eine kleine Menge an zusätzlich eingebrachtem Sauerstoff ausreichen.

Die Sauerstoffkonzentration des sekundären Injektionswassers ist lediglich dadurch limitiert, dass bei der Injektion ein Ausgasen unter Blasenbildung weitestgehend vermieden werden muss. Außerdem wird sie durch die Sauerstoffkonzentration des Reaktivwassers limitiert, denn der Druck im Reaktor, der für die Sauerstoffkonzentration des Reaktivwassers notwendig ist, muss sich in einem technisch realisierbaren Rahmen bewegen. Eine obere numerische Grenze für die Sauerstoffkonzentration des sekundären Injektionswassers kann hier aber nicht angegeben werden, da diese einerseits von den im jeweiligen Fall gegebenen technischen Möglichkeiten und andererseits von der Sauerstoffkonzentration des zu bearbeitenden Gewässers, den sauerstoffzehrenden Eigenschaften des zu bearbeitenden Sediments und vor allem vom Druck am Gewässerboden oder dem jeweiligen Injektionsort abhängt. Eine untere sinnvolle numerische Grenze für die Sauerstoffkonzentration des primären Injektionswassers ergibt sich aus der Sauerstoffkonzentration des zu bearbeitenden Gewässers. Jede Sauerstoffkonzentration, die oberhalb der Gewässer - Sauerstoffkonzentration liegt und die die Aufgabe erfüllt, ist erfindungsgemäß. Bevorzugt wird die Sauerstoffkonzentration des sekundären Injektionswasser durch Zumischen von Sauerstoffreichem Reaktivwasser eingestellt. Bevorzugt ist die Sauerstoffkonzentration des Reaktivwassers größer als die Sättigungskonzentration bei Normalbedingungen und reiner Sauerstoffatmosphäre.

Soll der Sauerstoffgehalt des Wasserkörpers ohne Behandlung des Sediments aufgestockt werden, um z.B. eine Sauerstoffunterversorgung von Fischlaichplätzen auszugleichen, kann das mit Sauerstoff angereicherte Wasser direkt dem Wasserkörper zugeführt werden. Hierfür wird der Injektionsbalken in einem angemessenen Abstand über den Sediment geführt. Der Abstand sollte mindestens so groß sein, dass das Sediment weitestgehend nicht in seinem Zustand (z.B. keine Suspendierung) verändert wird. Der Injektionsbalken kann dann in jedem beliebigen Abstand zur Oberfläche geführt werden, bevorzugt wird er jedoch möglichst sedimentnah geführt, um eine Sauerstoffanreicherung der sedimentnahen tieferen Wasserschichten zu erreichen.

Das Reaktivwasser wird, wie oben beschrieben, bevorzugt dem primären Injektionswasser vor der Injektion in einem bestimmten Mischungsverhältnis zugemischt. Aus der einzubringenden Menge an Sauerstoff pro Zeiteinheit und der Injektionsgeschwindigkeit ergibt sich die nötige Sauerstoffkonzentration des sekundären Injektionswassers und die Menge an sekundärem Injektionswasser, die pro Zeiteinheit eingebracht werden muss. Aus der nötigen Sauerstoffkonzentration des sekundären Injektionswassers ergibt sich die nötige Menge und die nötige Sauerstoffkonzentration des Reaktivwassers sowie das Mischungsverhältnis des Reaktivwassers mit dem primären Injektionswasser. Die benötigte Menge an Reaktivwasser pro Zeiteinheit und dessen zu erreichende Sauerstoffkonzentration sowie die Eigenschaften des für die Reaktivwasser-Herstellung verwendeten Wassers bestimmen die Dimension des Reaktors und die Bedingungen im Reaktor. Der Sauerstoffdruck und die tatsächliche Sauerstoffkonzentration im Reaktor kontrolliert die Sauerstoffkonzentration des gebildeten Reaktivwassers. Darauf abzustimmen ist die Verweilzeit des Wassers im Reaktor. Die nötigen Reaktordimensionen und die Reaktorbedingungen können mit Hilfe von Berechnungen abgeschätzt oder durch Routineversuche ermittelt werden. Der Einsatz von mehreren Reaktoren gleichzeitig ist auch möglich.

Mit Hilfe des oben beschriebenen erfindungsgemäßen Verfahrens werden bevorzugt mindestens 10 kg $O_2$ pro Stunde, mehr bevorzugt mindestens 20 kg $O_2$ pro Stunde und am meisten bevorzugt mindestens 30 kg $O_2$ pro Stunde in das Gewässer eingebracht. Es können auch mehr als 50 kg $O_2$ pro Stunde oder bevorzugt mehr als 60 kg $O_2$ pro Stunde oder besonders bevorzugt zwischen 60 und 100 kg $O_2$ pro Stunde in das Gewässer eingebracht werden. In speziellen Ausführungsformen werden mehr als 100 kg $O_2$ pro Stunde eingebracht.

Die Beladung des Injektionswassers mit Ozon erfolgt analog zur Beladung mit reinem Sauerstoff, es wird jedoch statt dem reinen Sauerstoffgas mit bis zu 13 Vol.-% Ozon angereichertes Sauerstoffgas dem Reaktor zugegeben. Die Reaktorbedingungen und der prozentuale Ozongehalt des Sauerstoffgases sind an die gewünschte Ozonkonzentration im Reaktivwasser bzw. im sekundären Injektionswasser durch das Mischungsverhältnis anzupassen. Die gewünschte Ozonkonzentration variiert mit den jeweiligen Gewässerumständen und dem zu erfüllenden Zweck. Erfindungsgemäß wird ein wesentlicher Eintrag in den Wasserkörper vermieden, außer dieser ist speziell erwünscht. Das im Reaktor gebildete Reaktivwasser kann separat oder zusätzlich zum primären oder sekundären Injektionswasser dem Sediment zugeführt werden. Das sekundäre Injektionswasser kann dabei ebenfalls Ozon enthalten. Das mit Ozon angereicherte Sauerstoffgas kann mit Hilfe eines geeigneten Reaktors auf dem Wasserfahrzeug unmittelbar vor der Verwendung erzeugt werden.

Wässrige Lösungen von Wasserstoffperoxid können in Tanks auf dem Wasserfahrzeug gelagert und dem primären oder sekundären Injektionswasser oder dem Reaktivwasser in gewünschten Mengen zudosiert werden. Die Menge an Wasserstoffperoxid im Injektionswasser wird erfindungsgemäß so eingestellt, dass kein maßgeblicher Eintrag in den Wasserkörper erfolgt. Ist aber unter Umständen ein gewisser Eintrag doch erwünscht, um zum Beispiel dadurch eine bakterizide Wirkung hervorzurufen oder Algenmassenentwicklungen zurückzudrängen, kann die Wasserstoffperoxidkonzentration entsprechend hoch eingestellt werden. Das Verfahren wird ansonsten analog zu der Einbringung von Sauerstoff, Ozon oder deren Mischungen ausgeführt.

Folgendes Beispiel soll die oben beschriebenen Zusammenhänge weiter erläutern und die Leistungsfähigkeit des Verfahrens zeigen, soll aber keine Einschränkung darstellen.

Die Ausgangsbedingungen sind 8 g/m$^3$ Sauerstoff im Umgebungswasser und 20°C Wassertemperatur (mög- liche Einflüsse von Inhaltsstoffen des Wassers bleiben unberücksichtigt). Bei einem Druck von 1,5 bar Sauerstoffgas im Reaktor erreicht man eine Sauerstoffkonzentration im Reaktivwasser von ungefähr 43 g Sauerstoff pro m$^3$ Wasser. Es werden zwei Reaktoren mit einem Durchfluss von 500 m$^3$/h verwendet. Das so gebildete Reaktivwasser wird dem primären Injektionswasser in einem Mischungsverhältnis von 1 : 8 beigemischt. Das so gebildete sekundäre Injektionswasser hat folglich eine Sauerstoffkonzentration von ungefähr 12 g/m$^3$ und wird mit 1,5 bar Überdruck sowie einer Injektionsgeschwindigkeit von 9000 m$^3$ pro Stunde in die Sedimentschicht injiziert. Daraus folgend erhält man einen Eintrag von ungefähr 36 kg $O_2$ pro Stunde.

Weitere Versuche, welche die Anmelder durchgeführt haben, haben gezeigt, dass eine Menge von 60 - 100 kg $O_2$ pro Stunde zusätzlich zum im primären Injektionswasser vorhandenem natürlich gelösten Sauerstoff dem Gewässer zugeführt werden kann. Hierbei wurden 8.000 m$^3$ sekundäres Injektionswasser stündlich über einen ca. 12 m langen, am Grund entlang geführten Injektionsbalken mit 24 auf das liegende Sediment gerichteten Düsen mit ca. 1,5 bar Überdruck gepumpt. Hochgerechnet kann in einem Hafenbecken mit ca. 10 ha Fläche und mit einer durchschnittlichen Tiefe von 6 m, in welchem durch unsachgemäßes Baggern ein Sauerstoffdefizit von 360 kg im Wasserkörper entstanden war, die fehlende Sauerstoffmenge innerhalb von 4 - 5 Stunden wieder zugeführt werden und damit ein beginnendes Fischsterben sogar abgemildert werden. Wird das Sediment vor dem Baggern erfindungsgemäß behandelt, kann ein Fischsterben schon im vorhinein verhindert werden.

**Patentansprüche**

1. Verfahren zur Behandlung von Gewässern bzw. deren Sedimente, bei welchem dem Sediment Wasser (sekundäres Injektionswasser), in dem ein umweltverträgliches Oxidationsmittel oder eine Mischung von mehreren geeigneten Oxidationsmitteln gelöst ist, im wesentlichen ohne Eintrag gasförmiger Bestandteile in das Sediment zugeführt wird, wobei das zu behandelnde Sediment suspendiert wird und als vom Wasserkörper des Gewässers getrennte suspendierte Sedimentschicht verbleibt, und die Menge an Oxidationsmittels oder der Mischung der Oxidationsmittel so gewählt wird, dass eine das Gewässer schädigende Eindiffusion von Sauerstoff aus dem Wasserkörper in die suspendierte Sedimentschicht im wesentlichen unterbleibt, wobei das Oxidationsmittel oder die Oxidationsmittelmischung direkt in dem der Umgebung für Injektionszwecke entnommenen Wasser (primäres Injektionswasser) vor der Injektion zur Herstellung des sekundären Injektionswassers gelöst wird.

2. Verfahren nach Anspruch 1, wobei die Behandlung der Sedimente oder des Wasserkörpers von einem Wasserfahrzeug ausgeführt wird.

3. Verfahren nach Anspruch 1, wobei die Behandlung der Sedimente oder des Wasserkörpers von einer stationär installierten Anlage ausgeführt wird.

4. Verfahren nach den Ansprüchen 1 bis 3, wobei ein Oxidationsmittel oder eine Oxidationsmittelmischung erst in Wasser gelöst wird (Reaktivwasser), und dieses Reaktivwasser dem aus der Umgebung entnommenem Wasser (primäres Injektionswasser) vor der Injektion zur Herstellung des sekundären Injektionswassers, vorzugsweise in einem Bypass, zugegeben wird.

5. Verfahren nach Ansprüchen 1 bis 3, wobei ein Oxidationsmittel oder eine Oxidationsmittelmischung erst in Wasser gelöst wird (Reaktivwasser), und dieses Reaktivwasser separat zum primären oder sekundären Injektionswasser in die Sedimentschicht injiziert wird.

6. Verfahren nach Ansprüchen 1 bis 5, wobei der selbe Gewässerabschnitt mehrmals hintereinander bearbeitet wird.

7. Verfahren nach einem der Ansprüche 1 bis 6, wobei das Oxidationsmittel nur aus Verbindungen von Sauerstoff oder Sauerstoff und Wasserstoff besteht, oder ein Kombination aus solchen ist.

8. Verfahren nach Anspruch 7, wobei das Oxidationsmittel oder die Mischung aus Oxidationsmitteln aus der Gruppe bestehend aus elementarem Sauerstoff ($O_2$), Ozon ($O_3$) und Wasserstoffperoxid ($H_2O_2$) ausgewählt ist.

9. Verfahren nach Anspruch 7, wobei das Oxidationsmittel Sauerstoff ($O_2$) umfasst.

10. Verfahren nach einem der Ansprüche 4 bis 9, wobei das Reaktivwasser *in situ* bei der Behandlung der Sedimentschicht oder des Wasserkörpers erzeugt wird.

11. Verfahren nach einem der Ansprüche 7 bis 10, wobei die Sauerstoffkonzentration des Reaktivwassers wenigstens der Sättigungskonzentration bei Normalbedingungen und reiner Sauerstoffatmosphäre entspricht.

12. Verfahren nach einem der Ansprüche 8 bis 11, wobei das Reaktivwasser in einem Reaktor durch Lösen von gasförmigem Sauerstoff in Wasser unter Sauerstoffdruck hergestellt wird, und das Wasser aus der Umgebung entnommenen wird und den Reaktor durchströmt.

13. Verfahren nach Anspruch 12, wobei flüssiger Sauerstoff über ein oder mehrere luftbeheizte Verdampfer in die Gasform übergeführt und über Düsen einem oder mehreren Reaktoren zugeführt wird.

14. Verfahren nach den Ansprüchen 8 bis 12, wobei eine Mischung aus gasförmigem Sauerstoff und Ozon verwendet wird.

15. Verfahren nach den Ansprüchen 1 und 8 bis 14, wobei eine wässrige Wasserstoffperoxidlösung entweder dem primären oder sekundären Injektionswasser oder dem Reaktivwasser zudosiert wird.

16. Verfahren nach einem der Ansprüche 1 bis 15, wobei die suspendierte Sedimentschicht abfließen darf.

17. Verfahren nach einem der Ansprüche 1 bis 15, wobei die suspendierte Sedimentschicht durch gewässerbautechnische Maßnahmen am Abfließen gehindert wird.

**Claims**

1. Method for treating bodies of water or sediments thereof, respectively, wherein water (secondary injection water) in which an environmental compatible oxidation agent or mixture of several suitable oxidation agents is dissolved, is supplied into the sediment, substantially without introducing gaseous components, wherein the sediment to be treated is suspended and is maintained as a suspended sediment layer separated from the water body of the body of water, and the amount of oxidation agent or mixture of oxidation agents is selected such that a diffusion of oxygen detrimental to the body of water from the body of water into the suspended sediment layer is substantially prevented, wherein the oxidation agent or the mixture of oxidation agents is directly dissolved in proximity of the water taken for injection purposes (primary injection water) in advance of the injection for the provision of the secondary injection water.

2. Method according to claim 1, wherein treatment of the sediments or the body of water is carried out from a water craft.

3. Method according to claim 1, wherein treatment of the sediments or the body of water is carried out from a stationary installed plant.

4. Method according to claims 1 to 3, wherein the oxidation agent or the mixture of oxidation agents is in advance dissolved in water (reactive water) and this reactive water is added to water taken from the environment (primary injection water) before injection for the provision of the secondary injection water, preferably within a bypass.

5. Method according to claims 1 to 3, wherein the oxidation agent or a mixture of oxidation agents is in advance dissolved in water (reactive water) and this reactive water is injected separate from the primary or secondary injection water into the sediment layer.

6. Method according to claims 1 to 5, wherein segment of the body of water is treated several times, consecutively.

7. Method according to anyone of claims 1 to 6, wherein the oxidation agent consists only of compounds of oxygen or oxygen and hydrogen, or is a combination thereof.

8. Method according to claim 7, wherein the oxidation agent or the mixture of oxidation agents is selected from the group, consisting of elementary oxygen ($O_2$), ozone ($O_3$) and hydrogen peroxide ($H_2O_2$).

9. Method according to claim 7, wherein the oxidation agent comprises oxygen ($O_2$).

10. Method according to anyone of claims 4 to 9, wherein the reactive water is generated in situ during the treatment of the sediment layer or the body of water.

11. Method according to anyone of claims 7 to 10, wherein the oxygen concentration of the reactive water corresponds at least to the concentration saturation at normal conditions and pure oxygen atmosphere.

12. Method according to anyone of claims 8 to 11, wherein the reactive water is produced in the reactor by dissolving the gaseous oxygen in water under oxygen pressure, and the water is taken from the environment and flows through the reactor.

13. Method according to claim 12, wherein liquid oxygen is transferred into the gas form by means of one or more vaporisers heated by air and is introduced into the reactor by means of one or more nozzles.

14. Method according to claims 8 to 12, wherein a mixture of gaseous oxygen and ozone is used.

15. Method according to claims 1 and 8 to 14, wherein an aqueous solution of hydrogen peroxide is dosed into the primary or secondary injection water or the reactive water.

16. Method according to anyone of claims 1 to 15, wherein the suspended sediment layer is allowed to flow of.

17. Method according to anyone of claims 1 to 15, wherein the suspended sediment layer is prevented from flowing of by means of technical water engineering measures.

**Revendications**

1. Procédé de traitement d'eaux et/ou de leurs sédiments, selon lequel de l'eau (eau d'injection secondaire), dans laquelle est dissous un oxydant compatible avec l'environnement ou un mélange de plusieurs oxydants appropriés, est injectée dans le sédiment essentiellement sans apport de constituants gazeux, le sédiment à traiter étant tenu en suspension et restant sous forme de couche de sédiment en suspension séparée de la masse aqueuse des eaux, et la quantité d'oxydant ou du mélange d'oxydants étant choisie de sorte qu'une diffusion préjudiciable d'oxygène depuis la masse d'eau, vers l'intérieur de la couche de sédiment en suspension est essentiellement inexistante, l'oxydant ou le mélange d'oxydants étant dissous directement avant l'injection dans l'eau (eau d'injection primaire), prélevée de l'environnement à des fins d'injection, pour produire l'eau d'injection secondaire.

2. Procédé suivant la revendication 1, dans lequel le traitement des sédiments ou de la masse d'eau est réalisé par un bateau.

3. Procédé suivant la revendication 1, dans lequel le traitement des sédiments ou de la masse d'eau est réalisé par une installation stationnaire.

4. Procédé suivant les revendications 1 à 3, dans lequel un oxydant ou un mélange d'oxydants est d'abord dissous dans de l'eau (eau réactive), et cette eau réactive est ajoutée avant l'injection à l'eau, prélevée de l'environnement (eau d'injection primaire), pour produire l'eau d'injection secondaire, de préférence dans un bipasse.

5. Procédé suivant les revendications 1 à 3, dans lequel un oxydant ou un mélange d'oxydants est d'abord dissous dans de l'eau (eau réactive), et cette eau réactive est injectée dans la couche de sédiment séparément de l'eau d'injection primaire ou secondaire.

6. Procédé suivant les revendications 1 à 5, dans lequel la même zone d'eaux est traitée successivement à plusieurs reprises.

7. Procédé suivant l'une des revendications 1 à 6, dans lequel l'oxydant ne se compose que de combinaisons d'oxygène ou d'oxygène et d'hydrogène, ou est une combinaison de tels éléments.

8. Procédé suivant la revendication 7, dans lequel l'oxydant ou le mélange d'oxydants est sélectionné parmi le groupe composé d'oxygène élémentaire ($O_2$), d'ozone ($O_3$) et de peroxyde d'hydrogène ($H_2O_2$).

9. Procédé suivant la revendication 7, dans lequel l'oxydant renferme de l'oxygène ($O_2$).

10. Procédé suivant l'une des revendications 4 à 9, dans lequel l'eau réactive est produite *in situ* lors du traitement de la couche de sédiment ou de la masse d'eau.

11. Procédé suivant l'une des revendications 7 à 10, dans lequel la concentration d'oxygène de l'eau réactive correspond au moins à la concentration de saturation aux conditions normales et sous atmosphère d'oxygène pure.

12. Procédé suivant l'une des revendications 8 à 11, dans lequel l'eau réactive est produite dans un réacteur par dissolution d'oxygène gazeux dans de l'eau sous pression d'oxygène, et l'eau est prélevée de l'environnement et traverse le réacteur.

13. Procédé suivant la revendication 12, dans lequel de l'oxygène liquide est transformé dans la phase gazeuse par l'intermédiaire d'un ou de plusieurs évaporateurs chauffés à l'air et est envoyé au travers de buses dans un ou dans plusieurs réacteurs.

14. Procédé suivant les revendications 8 à 12, dans lequel est utilisé un mélange d'oxygène gazeux et d'ozone.

15. Procédé suivant les revendications 1 et 8 à 14, dans lequel une solution aqueuse de peroxyde d'hydrogène est ajoutée par doses, soit à l'eau d'injection primaire ou secondaire, soit à l'eau réactive.

16. Procédé suivant l'une des revendications 1 à 15, dans lequel la couche de sédiment tenue en suspension peut s'écouler.

17. Procédé suivant l'une des revendications 1 à 15, dans lequel l'écoulement de la couche de sédiment tenue en suspension est empêché par des mesures hydrauliques.

Land

Wasserfahrzeug

**Tankanlage**

**Verdampfer**

**Druckreaktor**

Flüssigsauerstoff

Mess- und Regeltechnik

**Transportbehälter**

Injektionsbalken

Flüssigsauerstoff ca. 800 kg O 2

WI-Pumpe für
primäres/sekundäres
Injektionswasser
ca. 8000 m³/h

Pumpe f. O₂-Wasser
(Reaktivwasser)
ca. 1000 m³/h

Abb. 1

Land

Wasserfahrzeug

Tankanlage

Verdampfer

Rohrreaktor

Flüssigsauerstoff

Mess- und Regeltechnik

Transportbehälter

Sauerstoffgas

Flüssigsauerstoff ca. 800 kg $O_2$

Pumpe f. $O_2$-Wasser
(Reaktivwasser)
ca. 1000 m³/h

WI-Pumpe für
primäres/sekundäres
Injektionswasser
ca. 8000 m³/h

Abb. 2

Abb. 3

regelbares Ventil

Pumpe 50 m³/h

Durchmesser 150 -200 nm

Röhrlänge ca. 15000 mm

Stromstörer

Abb. 4

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4416591 C1
- EP 0119653 B1
- DE 19756582
- EP 0199653 B1

### In der Beschreibung aufgeführte Nicht-Patentliteratur

- **Robert F. Mudde.** Sauerstoffübertragung von Blasen ins Wasser. Delft-University ofTechnology, 26. Juni 2002